# EUROPÄISCHE PATENTSCHRIFT

(11) **EP 0 721 086 B1**
(45) Veröffentlichungstag und Bekanntmachung des Hinweises auf die Patenterteilung: **14.06.2000**
(21) Anmeldenummer: 96250001.3
(22) Anmeldetag: 03.01.1996
(51) Int. Cl.: F21V 8/00, G09F 13/18

(54) **Scheibenleuchte**
Flat lighting device
Plaque d'éclairage

(30) Priorität: 03.01.1995 DE 19501129
(43) Veröffentlichungstag der Anmeldung: 10.07.1996
(73) Patentinhaber: DR. ING. WILLING GMBH, D-96110 Schesslitz (DE)
(72) Erfinder: Willing, Achim, Dr.-Ing., D-96110 Schesslitz-Doschendorf (DE)
(74) Vertreter: Pfenning, Meinig & Partner

(56) Entgegenhaltungen:
- FR-A- 2 606 861
- GB-A- 2 234 581
- GB-A- 2 241 056

## Beschreibung

Die Erfindung betrifft eine Hinweisleuchte nach dem Oberbegriff des Hauptanspruchs.

Scheibenleuchten werden als Rettungszeichenleuchten oder als Hinweisleuchten verwendet und sie bestehen üblicherweise aus einem Lichtleitkörper und mindestens einer Lichtquelle mit Versorgungseinheiten. Der Lichtleitkörper weist eine oder mehrere Lichtleitplatten auf, die von einer Kante her durch die mindestens eine Lichtquelle beleuchtet werden, wobei vor der Vorderseite und an der hinteren Oberflächenseite mindestens eine Abdeckscheibe mit Abstand oder direkt angeordnet sind, die beispielsweise aus lichtstreuendem oder ohne Streuung transmittierendem bzw. reflektierendem Material bestehen und mindestens die vordere Abdeckscheibe lichtdurchlässig ist. Die Hinweiszeichen sind meistens auf den Lichtleitplatten direkt angeordnet.

Um das Licht in eine Lichteintrittskante der Lichtleitplattenanordnung eines derartigen Lichtleitkörpers einzuspeisen, werden üblicherweise die Lichtleitkörper mit entsprechenden Leuchtengehäusen kombiniert, die als selbständige trennbare Baugruppe entsprechend der Form der Lichteintrittskante bzw. - kanten gestaltet und die Lichtquelle sowie Betriebsgeräte enthalten sind. Zum Lampenwechsel wird meistens das Leuchtengehäuse vom Lichtleitkörper abgenommen und die in dem Gehäuse angeordnete Lampe oder Lampen ersetzt. Die bekannten Scheibenleuchten sind durch diese Trennung zwischen Lichtleitkörper und Gehäuse mit mindestens einer Lichtquelle und Betriebsgeräten für ihre Versorgung sowohl in ihrem konstruktiven Aufbau als auch in ihrem aufs Auge wirkenden Design begrenzt.

Aus der GB-A-2234 581 ist eine Flüssigkristallanzeigevorrichtung mit Beleuchtungsanordnung offenbart, die eine Bestandteil eines Gehäuses bildende Rückwand, eine Lichtleitplatte, eine Diffusionsplatte und eine Flüssigkristall anzeige in Übereinanderlage aufweist, wobei diese Anordnung von einem Rahmen umgriffen wird, der mit der Rückwand das Gehäuse darstellt. An den Enden der elliptisch ausgebildeten Lichtleitplatte sind bogenförmige Ausnehmungen eingearbeitet, in die mit der Rückwand verbundene Leuchtdioden eingreifen.

Die FR-A1-2 606 861 beschreibt eine dekorative Leuchte, die eine Vielzahl von miteinander verklebten Glasstreifen aufweist wobei die äußeren Glasstreifen mit Spiegeln abgedeckt sind. Die Spiegel sind länger ausgebildet als die Streifen und in dem Raum ist eine Glühlampe angeordnet, die mit Platten abgedeckt ist.

Der Erfindung liegt die Aufgabe zugrunde, eine Hinweisleuchte zu schaffen, die im Sinne einer Vereinfachung ein separates, vollständiges Leuchtengehäuse nicht mehr erforderlich macht und optisch ansprechend ausgeführt werden kann.

Diese Aufgabe wird erfindungsgemäß durch die kennzeichnenden Merkmale des Hauptanspruches in Verbindung mit den Merkmalen des Oberbegriffs gelöst.

Dadurch, daß über mindestens einer Kante der Lichtleitplatte ein Hohlraum ausgebildet ist, der zumindest von der Kante der Lichtleitplatte und den über die Lichtleitplatte herausragenden Abdeckscheiben als Begrenzungswände begrenzt und mit einer Abdeckung verschließbar ist, wird eine Möglichkeit geboten, beispielsweise Leitungen oder Zuleitungen der Leuchte oder insbesondere eine oder mehrere Lichtquellen, die als Lampen, Leuchtdioden oder Lichtleiter, insbesondere über die Längsrichtung abstrahlende Lichtleiter ausgebildet sein können, aufzunehmen.

Aufgrund der erfindungsgemäßen Ausbildung können konstruktiv variable sowie optisch ansprechende Scheibenleuchten mit einfachem Aufbau hergestellt werden.

Durch die in den Unteransprüchen angegebenen Maßnahmen sind vorteilhafte Weiterbildungen und Verbesserungen möglich.

Durch Ausbilden der Abdeckung als mit den Abdeckscheiben fest verbundene Platte mit stirnseitigen Deckeln, von denen nur einer lösbar sein kann, kann zum Lampenwechsel die Lampe stirnseitig aus dem Hohlraum herausgezogen werden, was besonders vorteilhaft bei Leuchten hoher Schutzart ist. Dadurch, daß die Abdeckung im Bereich der Lichtquelle transparent ausgebildet ist und gegebenenfalls mit lichtlenkenden bzw. -brechenden Elementen versehen ist, kann zusätzlich Licht für die Beleuchtung der Umgebung bereitgestellt werden.

Vorteilhafterweise kann die den Lichtleitkörper abschließende Abdeckscheibe im Bereich der Lampe abnehmbar oder abklappbar gestaltet werden. Dies ermöglicht einen einfachen Lampenwechsel.

Ausführungsbeispiele der Erfindung sind in der Zeichnung dargestellt und werden in der nachfolgenden Beschreibung näher erläutert. Es zeigen:
- Fig. 1: einen Querschnitt durch ein erstes Ausführungsbeispiel der erfindungsgemäßen Hinweisleuchte,
- Fig. 2: einen Querschnitt durch ein zweites Ausführungsbeispiel der erfindungsgemäßen Hinweisleuchte,
- Fig. 3a und 3b: einen Querschnitt und einen Längsschnitt durch ein drittes Ausführungsbeispiel der vorliegenden Erfindung,
- Fig. 4: einen Querschnitt durch ein viertes Ausführungsbeispiel der erfindungsgemäßen Hinweisleuchte,
- Fig. 5: einen Querschnitt durch ein fünftes Ausführungsbeispiel der erfindungsgemäßen Hinweisleuchte, und
- Fig. 6a und 6b: einen schematischen Längsschnitt und einen Querschnitt durch ein sechstes Ausführungsbeispiel der erfindungsgemäßen Hinweisleuchte.

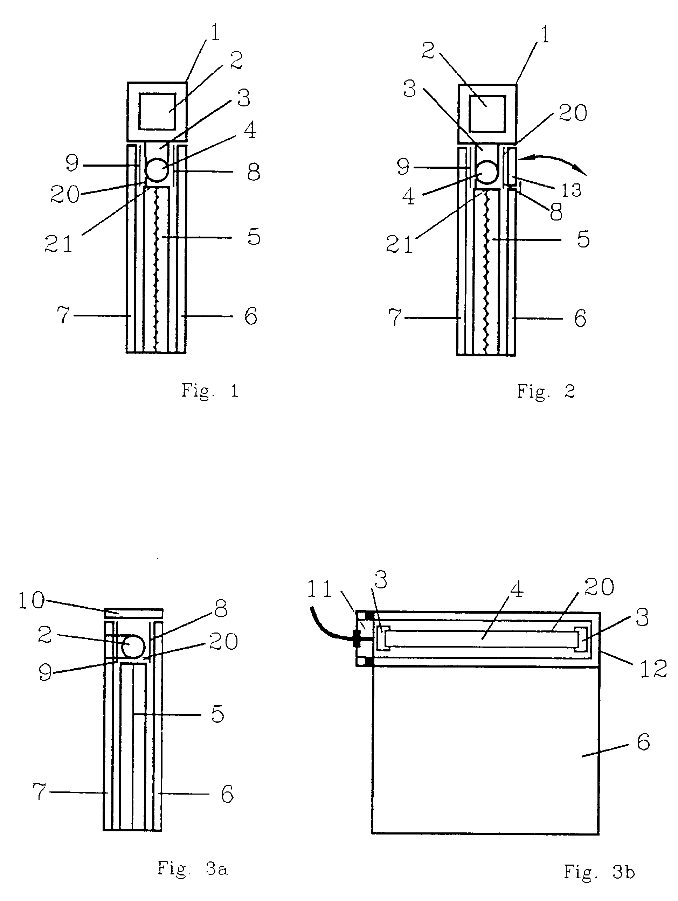

In Fig. 1 ist schematisch eine Hinweisleuchte dargestellt, die als Scheibenleuchte ausgebildet ist und eine aus zwei parallel zueinander angeordnete Scheiben bestehende Lichtleitplatte 5 aufweist, wobei auf den zugewandten Seiten der Scheiben eine die Totalreflexion unterbrechende Beschichtung vorgesehen ist. Die Lichtleitplatte 5 ist auf ihrer Vorder- und Rückseite jeweils von einer Abdeckscheibe 6, 7 abgedeckt. Mindestens die vordere Abdeckscheibe 6 ist lichtdurchlässig und Träger von Hinweiselementen, wobei ihr Material an den Aufbau und den Zweck der Scheibenleuchte angepaßt ist. Auch die rückseitige Abdeckscheibe 7 kann transmittierend sein, sie kann jedoch auch in einem das Licht nicht durchlassenden Material ausgebildet sein und mit einer reflektierenden Fläche versehen sein. Der Begriff Abdeckscheibe 6, 7 soll auch den Fall umfassen, bei dem mehrere Scheiben in einem mechanischen Verbund miteinander vorgesehen sind, wobei dabei nicht alle Scheiben über den Hohlraum zur Bildung der seitlichen Begrenzungswand hochgezogen sein müssen. Die Abdeckscheiben 6, 7 können direkt auf der Lichtleitplatte 5 oder mit leichtem Abstand zu ihr angeordnet sein. Die Abdeckscheiben 6, 7 ragen über die obere Kante 21 der Lichtleitplatte 5, die gleichzeitig die Lichteintrittskante bildet, hinaus, wodurch ein Hohlraum 20 gebildet wird, der von den Abdeckscheiben 6, 7 als seitliche Begrenzungswände und von der Lichteintrittskante begrenzt wird. Die schmalen Kanten des durch die Lichtleitplatten 5 und die Abdeckplatten 6, 7 gebildeten Lichtleitkörpers können mit Abdeckstreifen bzw. flachen Profilen abgeschlossen sein, die die stirnseitige Begrenzung des Hohlraums 20 bilden. Die Begrenzungswände des Hohlraums 20 sind mit Reflektoren 8, 9 ausgekleidet. Sie können jedoch auch mit wärmeableitenden Blechen abgedeckt sein oder reflektierend ausgebildet sein.

Der Hohlraum 20 nimmt eine beispielsweise als Leuchtstofflampe ausgebildete Lichtquelle 4 auf, die der Lichteintrittskante 21 gegenüberliegend angeordnet ist, und die über eine Fassung 3 mit einer kastenförmigen Tragkonstruktion 1 verbunden ist, in der beispielsweise ein Vorschaltgerät 2 oder andere Betriebsgeräte bzw. Stecker oder Sicherheitselemente und entsprechende elektrische Leitungen angeordnet sind. Die Tragkonstruktion 1 schließt zumindest den Hohlraum 20 ab und kann abziehbar auf die Abdeckscheiben 6, 7 aufgesetzt sein.

Zum Lampenwechsel wird die Tragkonstruktion 1 mit Lampe 4, Fassung 3 und dem Vorschaltgerät 2 abgezogen.

In Fig. 2 ist ein Teil 13 der Abdeckscheibe 6 abklappbar oder abnehmbar gestaltet, was durch die Pfeile angedeutet ist, wobei der Lampenwechsel über die abgeklappte oder abgenommene Abdeckscheibe ohne die Notwendigkeit des Entfernens der Tragkonstruktion durchgeführt werden kann. Zwischen Abdeckscheibe und den abklappbaren Teil 13 kann eine Materialverbindung bleiben, beispielsweise können Scharniere, Bänder oder dergleichen vorgesehen sein. Auch kann zum Abklappen eine Nut in die Abdeckscheibe 6 eingearbeitet sein, wobei der verbleibende Materialsteg die Scharnierfunktion übernimmt. Der abklappbare oder entfernbare Teil 13 kann auch aus einem anderen Material bestehen.

In den Fign. 3a und 3b wird der Hohlraum 20 durch eine mit den Abdeckscheiben 6, 7 verbundene Platte 10 wasserdicht bzw. wassergeschützt abgedeckt, wobei an einer Stirnseite ein den Hohlraum verschließender Deckel 11 mit entsprechender Durchführung für eine oder mehrere Leitungen lösbar angeordnet ist. Für einen Lampenwechsel wird der Deckel 11 abgezogen. Die dem lösbaren Deckel 11 gegenüberliegende Abschlußwand 12 kann nur den Hohlraum 20 abdecken oder sich über die gesamte Stirnkante erstrecken, wobei sie fest mit den Abdeckscheiben 6, 7 verbunden ist.

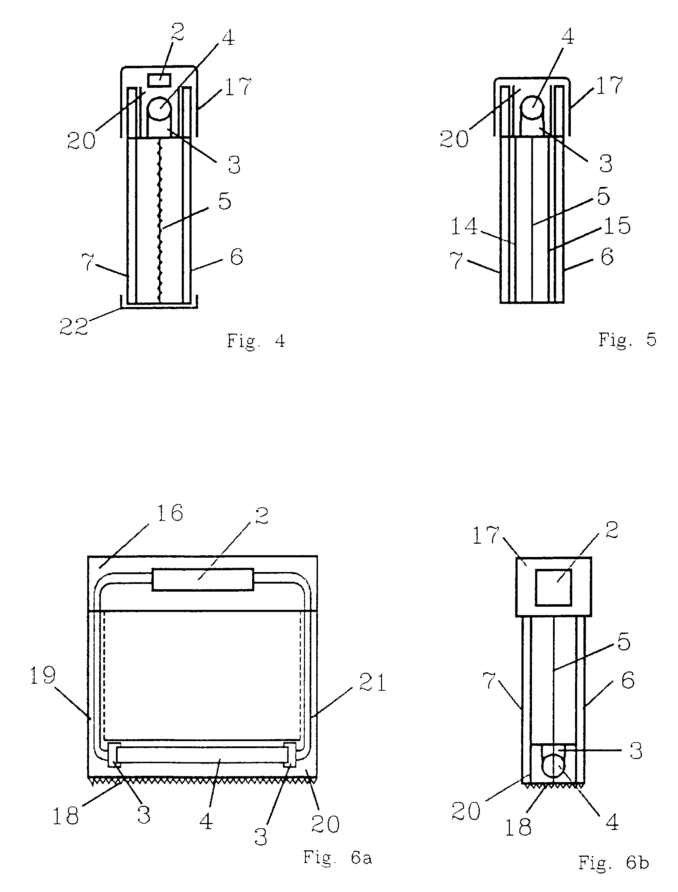

In Fig. 4 ist die den Hohlraum 20 verschließende Abdeckung als im Querschnitt U-förmige Kappe 17 ausgebildet, wobei hier die Lampe 4 über die Fassungen 3 mit dem Lichtleitkörper verbunden ist. Das Vorschaltgerät 2 kann mit der Kappe 17 verbunden sein, sie kann aber auch mit der Lampe und Fassung 3, 4 eine Einheit bilden. Die untere Stirnkante des Lichtleitkörpers wird durch eine U-Schiene 22 abgedeckt. Nach dem Entfernen der Kappe 17 ist die Lampe 4 und das Vorschaltgerät 2 entweder direkt oder durch Entfernen einer Abdeckscheibe 6, 7 zugänglich.

In Fig. 4 sind die Abdeckscheiben 6, 7 direkt auf der Lichtleitplatte 5 angeordnet, und in Fig. 5 sind zusätzlich zu den Abdeckscheiben 6, 7 weitere Platten 14, 15 parallel angeordnet, die in ihrer Gesamtheit die Abdeckung der Lichtleitplatte 5 bilden. Der U-förmige Hohlraum 20 wird hier von den äußeren Abdeckscheiben 6, 7 begrenzt bzw. sind an diese Abdeckscheiben 6, 7 Verlängerungsstücke angesetzt, es könnten auch die Platten 14, 15 als Begrenzungswände des Hohlraums 20 dienen oder alle Platten bzw. Scheiben außer der Lichtleitplatte 5 hochgezogen sein.

In Fign. 6a und 6b umgreifen die Abdeckscheiben 6, 7 die Lichtleitplatte 5 derart, daß über jeder Kante der Lichtleitplatte 5 ein Hohlraum 20, 16, 19, 21 ausgebildet ist. Im dargestellten Fall ist die Lichtquelle im unteren Hohlraum 20 angeordnet und das Vorschaltgerät 2 in dem Hohlraum 20 entgegengesetztliegenden Hohlraum 16, wobei die die Fassungen 3 mit dem Vorschaltgerät 2 verbindenden Leitungen in den seitlichen Hohlräumen 19, 21 aufgenommen sind. Der Hohlraum 16 für das Vorschaltgerät 2 wird von einer Kappe 17 abgedeckt, während im vorliegenden Fall der Hohlraum 20 für die Lichtquelle 4 durch eine transparente Abdeckscheibe 18 mit lichtlenkenden bzw. -brechenden Elementen abgeschlossen wird. Auf diese Weise kann eine Wegebeleuchtung zusätzlich zur Verfügung gestellt werden. Selbstverständlich können die Hohlräume auch mit anderen vorher beschriebenen Abdeckungen versehen sein.

In den Ausführungsbeispielen wurde als Lichtquelle auf eine Leuchtstofflampe 4 Bezug genommen. Selbstverständlich können neben einer langgestreckten Leuchtstofflampe auch andere Lichtquellen vorgesehen sein, beispielsweise kann der Hohlraum 20 eine oder mehrere punktförmige Lichtquellen oder einen stabförmigen Lichtleiter mit Lichtaustritt über die Länge oder eine Vielzahl von Leuchtdioden aufnehmen. Auch können mehrere Lichtleiteinspeisungen über eine Kante oder über mehrere Kanten vorgesehen sein.

Die Lichtquelle mit Fassungen kann an den Abdeckscheiben oder auch an der Lichtleitplatte selbst befestigt sein. Die Abdeckscheiben können klar transparent, transparent, fluoreszierend, lichtstreuend sein und aus unterschiedlichen Materialien bestehen. Im Bereich des oder der Hohlräume können die Abdeckscheiben auch lichtundurchlässig bzw. wenig transmittierend sein.

In einem weiteren Ausführungsbeispiel können zwei oder mehrere Scheibenleuchten so aneinandergereiht sein, daß die Lampe der einen Leuchte gleichzeitig in den Hohlraum mit der Lichteintrittskante der anderen Leuchte einstrahlt.

Die Lichtquellen bzw. Betriebsgeräte können an der Abdeckung des Hohlraums und/oder den Abdeckscheiben und/oder der Lichtleitplatte befestigt sein.

In einem nicht dargestellten Ausführungsbeispiel ist zumindest eine der Abdeckscheiben abnehmbar. Die Abdeckscheibe ist in einem Profil, das auch umlaufend als Profilrahmen ausgebildet sein kann, beispielsweise in einem nutenförmigen Profil, geführt, wobei in den Nuten Federelemente bzw. elastische Dichtungselemente angeordnet sein können. Zum Abnehmen kann die Abdeckscheibe gegen die Kraft der Feder- bzw. Dichtungselemente gedrückt werden, wodurch sie gegenüberliegend freigegeben wird und entfernt werden kann und der Hohlraum zugänglich ist. Auch kann beispielsweise zumindest eine Abdeckscheibe durch eine als Kappe ausgebildete Abdeckung festgelegt werden und bei Entfernen der Kappe kann auch die Abdeckscheibe entfernt werden.

Da es Lichtquellen mit einer sehr hohen Lebensdauer gibt, wie Leuchtstofflampen oder Leuchtdioden, ist es möglich, die umlaufenden Ränder der Abdeckscheiben fest mit einer oder mehreren Abdeckungen zu verbinden, derart, daß der bzw. die zwischen Abdeckscheiben, Lichtleitplatte und Abdeckung(en) gebildete(n) Hohlraum bzw. Hohlräume zur Aufnahme der Lichtquelle und/oder Betriebsgerät nicht mehr der nur mit großem Aufwand zu öffnen ist.

## Patentansprüche

1. Hinweisleuchte, die als Scheibenleuchte ausgebildet ist, mit mindestens einer Lichtleitplatte (5) und jeweils mindestens einer die vordere und hintere Oberflächenseite der Lichtleitplatte überdeckenden Abdeckscheibe (6, 7) und mit einer Lichtquellenanordnung (4), die über mindestens eine Lichteintrittskante (21) der Lichtleitplatte (5) Licht einspeist, wobei über der Lichteintrittskante (21) ein Hohlraum (20) ausgebildet ist, der von der Lichteintrittskante (21) der Lichtleitplatte (5), den Abdeckscheiben (6, 7) und von einer Abdeckung (1, 10, 17, 18) begrenzt ist und in den die Lichtquellenanordnung hineinragt,
**dadurch gekennzeichnet,**
daß die Abdeckscheiben zumindest teilweise transparent sind und Hinweiselemente tragen, daß die Lichtleitplatte (5) viereckig ist und die Abdeckscheiben (6, 7) als seitliche Begrenzungswände derart über die Lichteintrittskante (21) der Lichtleitplatte (5) herausragen, daß ein langgestreckter Hohlraum (20) gebildet wird, in dem eine langgestreckte Lichtquellenanordnung (4) aufgenommen ist.

2. Hinweisleuchte nach Anspruch 1, dadurch gekennzeichnet, daß mehrere Hohlräume (20, 16, 19, 21) über den Kanten der Lichtleitplatte zur Aufnahme der Lichtquellenanordnung (4) und/oder von Betriebsgeräten (3, 4) ausgebildet sind.

3. Hinweisleuchte nach Anspruch 1 oder 2, dadurch gekennzeichnet, daß die Abdeckung (1, 10, 17, 18) zumindest teilweise entfernbar, abklappbar oder auswechselbar ist.

4. Hinweisleuchte nach Anspruch 1 oder 2, dadurch gekennzeichnet, daß die Abdeckung als fest mit den Abdeckscheiben (6, 7) verbundene Platte (10, 18) ausgebildet ist.

5. Hinweisleuchte nach Anspruch 4, dadurch gekennzeichnet, daß stirnseitig den Hohlraum bzw. die Hohlräume abdeckende Deckel (11, 12) vorgesehen sind, von denen mindestens einer abnehmbar ist.

6. Hinweisleuchte nach Anspruch 3, dadurch gekennzeichnet, daß die Abdeckung als den Hohlraum bzw. die Hohlräume und seine seitlichen Begrenzungswände zumindest teilweise übergreifende Kappe (17) oder Profilelement oder Profilrahmen ausgebildet ist.

7. Hinweisleuchte nach einem der Ansprüche 1 bis 6, dadurch gekennzeichnet, daß mindestens eine Abdeckscheibe im Bereich eines die Lichtquelle enthaltenden Hohlraums entfernbar, abklappbar oder auswechselbar ist, wobei gegebenenfalls eine Materialverbindung zur restlichen Abdeckscheibe bestehen bleibt.

8. Hinweisleuchte nach einem der Ansprüche 1 bis 7, dadurch gekennzeichnet, daß die Abdeckung (18) zumindest teilweise durchsichtig ist und gegebenenfalls mit lichtbrechenden Elementen ausgebildet ist.

9. Hinweisleuchte nach einem der Ansprüche 1 bis 8, dadurch gekennzeichnet, daß die Hohlräume einschließlich ihrer gegebenenfalls entfernbaren Abdeckung wassergeschützt ausgebildet sind.

10. Hinweisleuchte nach Anspruch 3, dadurch gekennzeichnet, daß zumindest eine Abdeckscheibe (6, 7) in einem Nutenprofil geführt ist, in dem Feder- bzw. elastische Dichtelemente angeordnet sind.

## Claims

1. Directional lighting device arranged as a flat lighting device, comprising at least one light ducting plate (5) and at least one respective cover plate (6, 7) which covers the front and rear surface side of the light ducting plate and one light source arrangement (4) which feeds light via at least one light entry edge (21) of the light ducting plate (5), and above the light entry edge (21) is established a cavity (20) which is defined by the light entry edge (21) of the light ducting plate (5), the cover plates (6, 7) and a cover (1, 10, 17, 18) and intrudes into the light source arrangement, **characterised in that** the cover plates are at least partially transparent and carry directional elements, the light ducting plate (5) is rectangular, and the cover plates (6, 7) as lateral defining walls protrude over the light entry edge (21) of the light ducting plate (5) in such a manner that an elongated cavity (20) is formed in which an elongated light source arrangement (4) is accommodated.

2. Directional lighting device according to Claim 1, **characterised in that** a plurality of cavities (20, 16, 19, 21) is established above the edges of the light ducting plate for the purpose of accommodating the light source arrangement (4) and/or operational devices (3, 4).

3. Directional lighting device according to Claim 1 or 2, **characterised in that** the cover (1, 10, 17, 18) is at least partially removable, unfoldable or exchangeable.

4. Directional lighting device according to Claim 1 or 2, **characterised in that** the cover is designed as a plate (10, 18) which is firmly joined to the cover plates (6, 7).

5. Directional lighting device according to Claim 4, **characterised in that** covers (11, 12), of which at least one is removable, are provided which cover the cavity or cavities at the end side.

6. Directional lighting device according to Claim 3, **characterised in that** the cover is designed as a cap (17) or profile element or profile frame which at least partially reaches over the cavity or the cavities and its/their lateral defining walls.

7. Directional lighting device according to one of Claims 1 to 6, **characterised in that** at least one cover plate in the area of a cavity which accommodates a light source is removable, unfoldable or exchangeable, whereby if appropriate a material link with the remaining cover plate remains.

8. Directional lighting device according to one of Claims 1 to 7, **characterised in that** the cover (18) is at least partially transparent and, if appropriate, fitted with refractive elements.

9. Directional lighting device according to one of Claims 1 to 8, **characterised in that** the cavities including their cover, which is removable if appropriate, are of watertight design.

10. Directional lighting device according to Claim 3, **characterised in that** at least one cover plate (6, 7) is guided in a groove profile in which spring or elastic sealing elements are accommodated.

## Revendications

1. Eclairage de signalisation, qui est conçue en tant qu'éclairage à vitre, comportant au moins une plaque de guidage de lumière (5) et respectivement au moins une vitre de recouvrement (6, 7) recouvrant les surfaces avant et arrière de la plaque de guidage de la lumière, et un dispositif de source lumineuse (4), qui alimente en lumière la plaque de guidage de lumière (5) par au moins une arête d'entrée de lumière (21), un espace creux (20) étant prévu au-dessus de l'arête d'entrée de lumière (21), lequel est délimité par l'arête d'entrée de lumière (21) de la plaque de guidage de lumière (5), par les vitres de recouvrement (6,7) et par un dispositif de recouvrement (1, 10, 17, 18) et dans lequel s'insère le dispositif de source lumineuse,
caractérisée en ce que les vitres de recouvrement sont au moins partiellement transparentes et portent des éléments indicateurs, en ce que la plaque de guidage de lumière (5) est rectangulaire et les vitres de recouvrement (6, 7) ressortent en tant que parois de délimitation latérales au-dessus de l'arête d'entrée de lumière (21) de la plaque de guidage de lumière (5) de façon telle qu'un espace creux allongé (20) est formé, dans lequel est placé un dispositif de source lumineuse allongé (4).

2. Eclairage de signalisation selon la revendication 1, caractérisée en ce que plusieurs espaces creux (20, 16, 19, 21) sont formés au-dessus des arêtes de la plaque de guidage de lumière pour recevoir le dispositif de source lumineuse (4) et/ou des appareils d'exploitation (3, 4).

3. Eclairage de signalisation selon la revendication 1 ou 2, caractérisée en ce que le dispositif de recouvrement (1, 10, 17, 18) est au moins partiellement démontable, rabattable ou détachable.

4. Eclairage de signalisation selon la revendication 1 ou 2, caractérisée en ce que le dispositif de recouvrement est conçu en tant que plaque fixe (10, 18) reliée aux vitres de recouvrement (6, 7).

5. Eclairage de signalisation selon la revendication 4, caractérisée en ce que sont prévus sur la face avant des couvercles (11, 12) recouvrant l'espace creux ou les espaces creux, parmi lesquels au moins un est amovible.

6. Eclairage de signalisation selon la revendication 3, caractérisée en ce que le dispositif de recouvrement est conçu en tant que chapeau (17) empiétant au moins partiellement sur l'espace creux ou les espaces creux et ses parois latérales de délimitation, ou en tant qu'élément profilé ou cadre profilé.

7. Eclairage de signalisation selon l'une des revendications 1 à 6, caractérisée en ce qu'au moins une vitre de recouvrement est démontable, rabattable ou détachable dans la zone d'un espace creux contenant la source lumineuse, une liaison de matériau restant éventuellement vers le reste de la vitre de recouvrement.

8. Eclairage de signalisation selon l'une des revendications 1 à 7, caractérisée en ce que le dispositif de recouvrement (18) est au moins partiellement translucide et éventuellement conçu avec des éléments de réfraction de la lumière.

9. Eclairage de signalisation selon l'une des revendications 1 à 8, caractérisée en ce que les espaces creux, y compris leur dispositif de recouvrement éventuellement démontable, sont conçus pour être protégés de l'eau.

10. Eclairage de signalisation selon la revendication 3, caractérisée en ce qu'au moins une vitre de recouvrement (6, 7) est guidée dans une rainure de profil, dans laquelle sont disposés des éléments d'étanchéité à ressort ou élastiques.
